# EUROPEAN PATENT APPLICATION

(11) **EP 4 651 604 A1**
(43) Date of publication of application: **19.11.2025**
(21) Application number: 24741701.7
(22) Date of filing: 10.01.2024
(51) Int. Cl.: H04W 72/232, H04W 72/04, H04W 72/12, H04L 5/14

(54) **METHOD AND DEVICE FOR PERFORMING DOWNLINK TRANSMISSION/RECEPTION IN FULL-DUPLEX COMMUNICATION**

(30) Priority: 10.01.2023 KR 20230003391; 05.04.2023 KR 20230044624; 08.01.2024 KR 20240002610
(71) Applicant: KT Corporation, Seongnam-si, Gyeonggi-do 13606 (KR)
(72) Inventor: PARK, Kyu Jin, Seongnam-si, Gyeonggi-do 13606 (KR)
(74) Representative: Santarelli
(86) International application number: PCT/KR2024/000487
(87) International publication number: WO 2024/151080

(57) **Abstract**

Provided is a method of a user equipment (UE) to perform downlink reception in full-duplex communication. The method may include receiving configuration information about a downlink slot or a downlink symbol, receiving downlink resource allocation information including information about allocated frequency resources in the downlink slot or the downlink symbol, and performing downlink reception on the basis of the downlink resource allocation information, wherein the downlink slot or the downlink symbol includes an SBFD symbol in which uplink sub-bands for full-duplex communication are configured, and the frequency resources include frequency resources set as the uplink sub-bands.

## Description

### Technical Field

The disclosure relates to methods and devices for performing downlink transmission/reception in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology (hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of this aspect, there is a need for a specific design that efficiently performs downlink transmission/reception within a symbol where full-duplex communication is applied in a wireless network.

### Detailed Description of the Invention

### Technical Problem

The disclosure may provide a method and device for performing downlink transmission/reception in full-duplex communication.

### Technical Solution

In an aspect, the disclosure may provide a method for performing downlink reception by a user equipment (UE) in full-duplex communication. The method may include receiving configuration information for a downlink slot or a downlink symbol, receiving downlink resource allocation information including information about a frequency resource allocated in the downlink slot or the downlink symbol, and performing downlink reception based on the downlink resource allocation information, wherein the downlink slot or the downlink symbol includes a subband full duplex (SBFD) symbol where an uplink subband for full-duplex communication is configured, and wherein the frequency resource includes a frequency resource configured as the uplink subband.

In another aspect, the disclosure may provide a method for performing downlink transmission by a base station in full-duplex communication. The method may include transmitting configuration information for a downlink slot or a downlink symbol, transmitting downlink resource allocation information including information about a frequency resource allocated in the downlink slot or the downlink symbol, and performing downlink transmission based on the downlink resource allocation information, wherein the downlink slot or the downlink symbol includes a subband full duplex (SBFD) symbol where an uplink subband for full-duplex communication is configured, and wherein the frequency resource includes a frequency resource configured as the uplink subband.

In another aspect, the disclosure may provide a UE performing downlink reception in full-duplex communication. The UE may include a transmitter, a receiver, and a controller controlling an operation of the transmitter and the receiver, wherein the controller receives configuration information for a downlink slot or a downlink symbol, receives downlink resource allocation information including information about a frequency resource allocated in the downlink slot or the downlink symbol, and performs downlink reception based on the downlink resource allocation information, wherein the downlink slot or the downlink symbol includes a subband full duplex (SBFD) symbol where an uplink subband for full-duplex communication is configured, and wherein the frequency resource includes a frequency resource configured as the uplink subband.

In another aspect, the disclosure may provide a base station performing downlink transmission in full-duplex communication. The base station may include a transmitter, a receiver, and a controller controlling an operation of the transmitter and the receiver, wherein the controller transmits configuration information for a downlink slot or a downlink symbol, transmits downlink resource allocation information including information about a frequency resource allocated in the downlink slot or the downlink symbol, and performs downlink transmission based on the downlink resource allocation information, wherein the downlink slot or the downlink symbol includes a subband full duplex (SBFD) symbol where an uplink subband for full-duplex communication is configured, and wherein the frequency resource includes a frequency resource configured as the uplink subband.

### Advantageous Effects

According to the embodiments of the disclosure, downlink transmission/reception may efficiently performed within a slot or symbol to which full-duplex communication.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a flowchart illustrating a method of performing downlink reception by a UE according to an embodiment.
FIG. 9 is a flowchart illustrating a method of performing downlink transmission by a base station according to an embodiment.
FIGS. 10 and 11 are views illustrating a TDD frame in which an uplink subband is configured in a downlink slot according to an embodiment.
FIG. 12 is a block diagram illustrating a UE according to an embodiment; and
FIG. 13 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

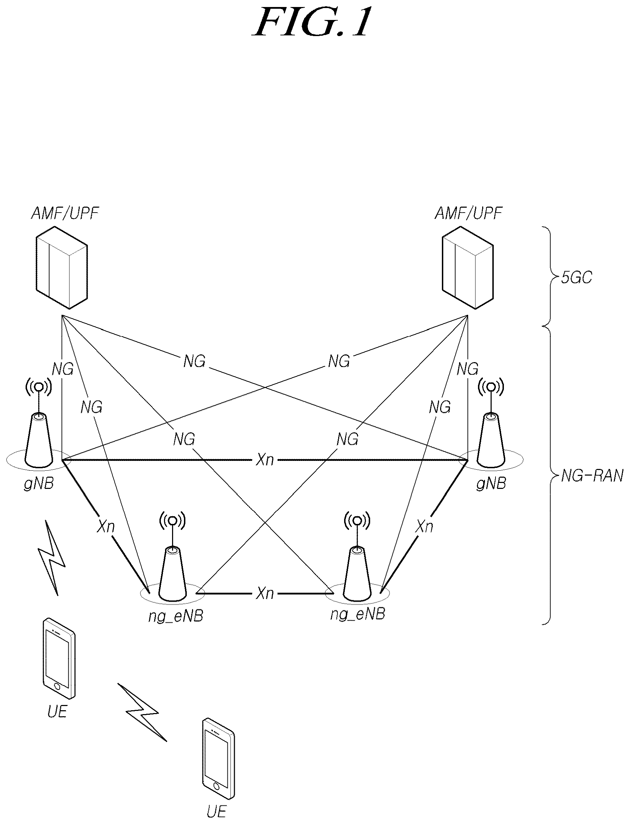

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

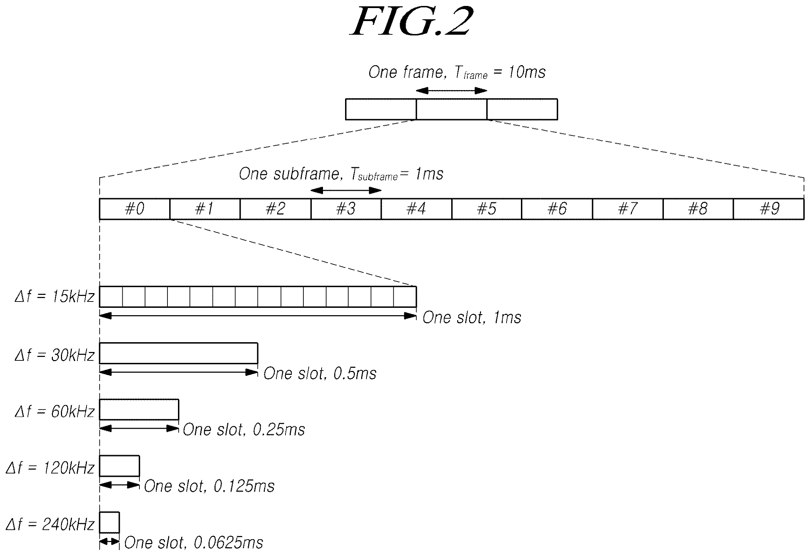

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

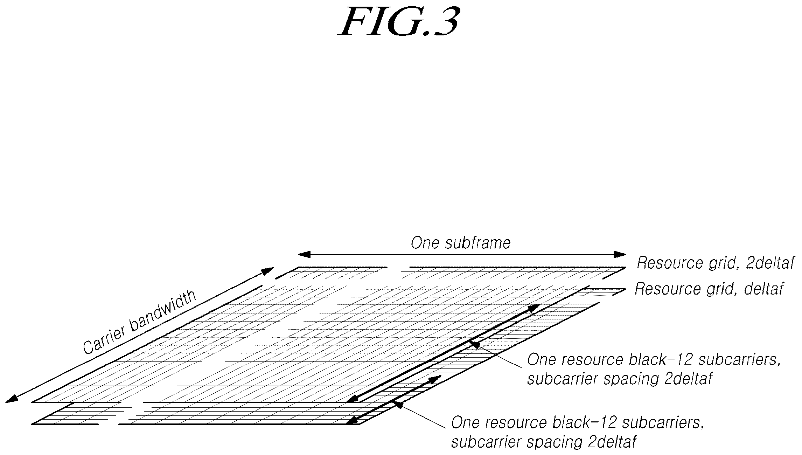

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

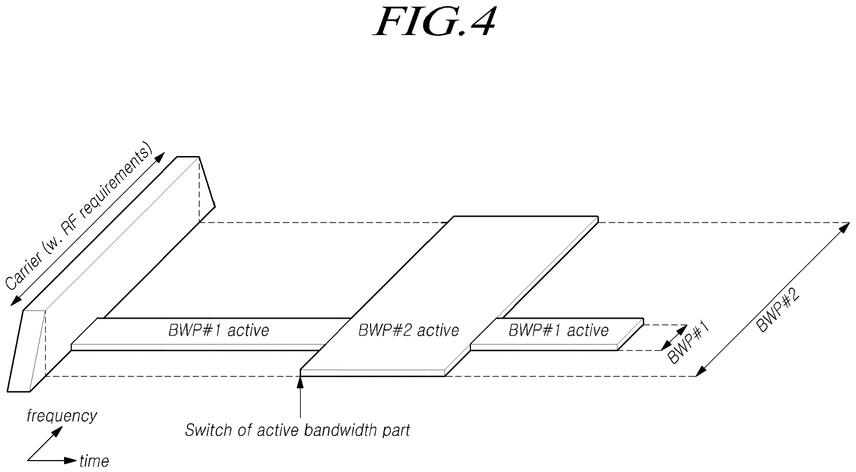

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

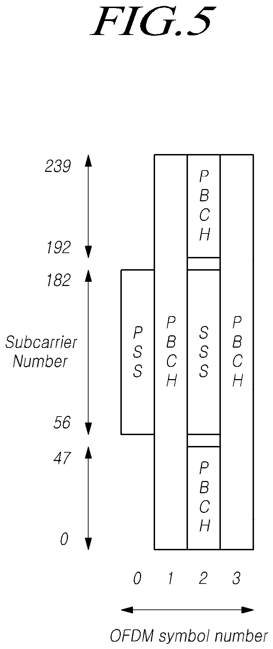

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

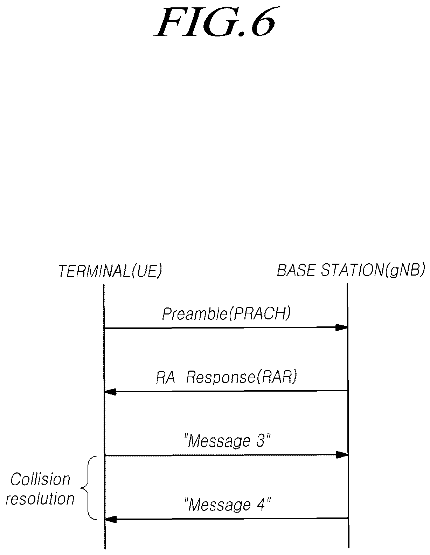

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

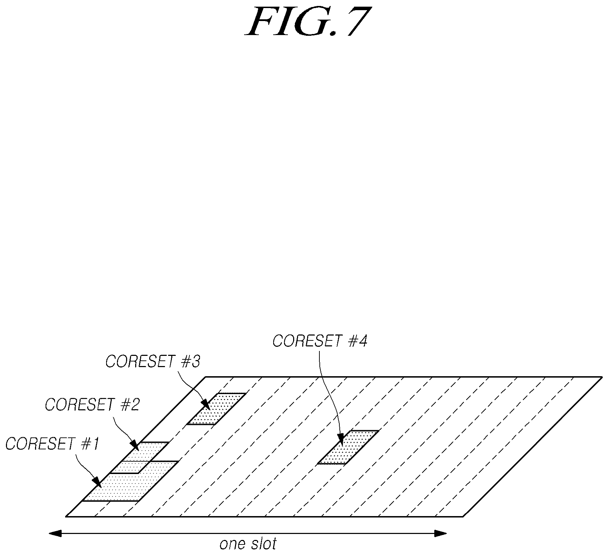

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method of performing downlink reception by a UE in full-duplex communication is described in detail with reference to the related drawings.

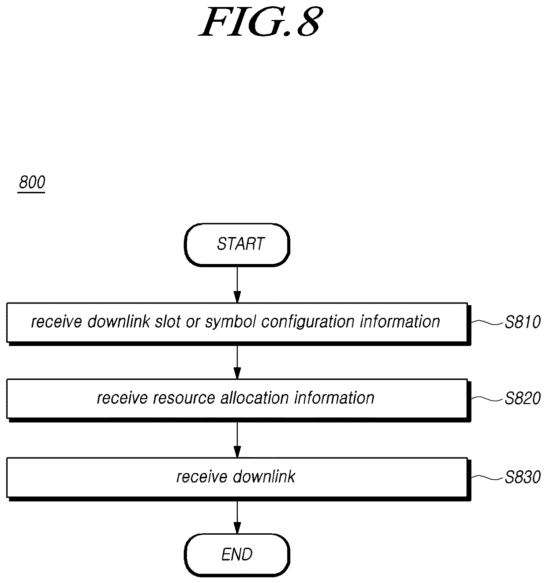

FIG. 8 is a flowchart illustrating a method 800 of a user equipment (UE) for performing downlink reception according to an embodiment.

Referring to FIG. 8, the UE may receive configuration information for a downlink slot or a downlink symbol (S810).

The time division duplex (TDD) divides and uses time-domain radio resources into a downlink slot and an uplink slot, and the UE may receive TDD configuration information from the base station to determine the format of the symbol. In this case, the TDD configuration information may include slot format configuration information (e.g., configuration information about the format of the slot) and symbol format configuration information (e.g., configuration information for determining the format of the symbol) within the slot, and the corresponding information may be received through higher layer signaling or physical layer signaling (e.g., L1 signaling).

The UE may receive TDD configuration information for uplink-downlink slot configuration from the base station. In this case, the corresponding slot configuration may be configured on a per-cell basis through higher layer signaling, e.g., cell-specific RRC signaling. In other words, a downlink symbol, an uplink symbol, and a flexible symbol with an undetermined transmission direction of a predetermined period may be configured through an RRC message for configuring a corresponding UL-DL slot.

Further, the UE may receive UE-specific RRC signaling in which flexible symbols among symbols configured through cell-specific RRC signaling are reallocated to uplink symbols, downlink symbols, or flexible symbols for each UE.

Alternatively, the UE may receive an indication of a dynamic slot format through a UE-group common PDCCH. According to an embodiment, the UE may dynamically receive the slot format through DCI format 2_0.

Full-duplex communication is a technique in which the base station simultaneously performs downlink transmission and uplink reception in the same radio resource. The UE side may simultaneously perform downlink reception and uplink transmission. When the base station supports full-duplex communication based on non-overlapping subband, a specific frequency resource in the same symbol in the TDD carrier may be used for downlink transmission, and another frequency resource may be used for uplink reception.

In other words, for the TDD carrier, some frequency resources may be utilized for uplink transmission of the UE in any downlink slot or downlink symbol, or may be utilized like a flexible symbol for downlink/uplink transition. For example, when an uplink subband is configured in any downlink slot, the uplink subband may be set at the center of the corresponding frequency band or at the edge of the corresponding frequency band. In this case, a guard band may be configured between the uplink subband and downlink subband (e.g., the remaining frequency band other than the uplink subband and guard band among the frequency bands allocated to the UE) in the corresponding slot. The UE may receive configuration information about the subband for full-duplex communication from the base station.

As such, a downlink slot or symbol including an uplink subband is referred to as a subband full duplex (SBFD) slot or SBFD symbol in the disclosure. However, the term SBFD is for convenience of description. The scope of the disclosure is not limited thereby and may be referred to by other terms as necessary. In other words, the downlink slot or the downlink symbol configured for the UE may include a subband full duplex (SBFD) symbol where an uplink subband for full-duplex communication is configured. In other words, an uplink subband may be configured for at least a portion of a downlink slot or downlink symbol set for an UE. In this case, for the corresponding slot or symbol, an uplink subband, a downlink subband, and/or a guard band may be configured.

The UE may receive configuration information for an SBFD slot or SBFD symbol, which is information for a downlink slot or symbol including an uplink subband, i.e., information for time resources. In other words, the UE may receive information about the slot or symbol in which an uplink subband is configured among downlink slots or symbols allocated to the UE.

Referring again to FIG. 8, the UE may receive downlink resource allocation information including information for frequency resources that are allocated in a downlink slot or downlink symbol (S820).

The UE may receive downlink resource allocation information including time resources and frequency resources from the base station for downlink reception. Here, downlink reception refers to an operation of receiving a downlink radio channel or downlink radio signal including a downlink data channel (physical downlink shared channel (PDSCH)). As long as the technical spirit of the disclosure is substantially maintained, the downlink radio channel or downlink radio signal is not limited to a specific type.

Information about time resources included in the downlink resource allocation information may include information about a downlink slot or symbol. In this case, information about a slot or symbol set as an SBFD slot or SBFD symbol among the downlink slots or symbols may also be included.

Further, frequency resources included in the downlink resource allocation information may include frequency resources set as an uplink subband. In other words, information about frequency resources included in the downlink resource allocation information may include information about frequency resources set as an uplink subband. Further, frequency resources included in the downlink resource allocation information may include frequency resources set as a guard band along with frequency resources set as an uplink subband.

Referring back to FIG. 8, the UE may perform downlink reception based on the downlink resource allocation information (S830).

The UE may perform downlink reception according to information about time resources and frequency resources included in the downlink resource allocation information. In this case, the UE may use frequency resources configured as an uplink subband, guard band, or a downlink subband, for downlink reception among frequency resources allocated in an SBFD slot or SBFD symbol. Hereinafter, a specific method for efficiently using the frequency resources for downlink reception when frequency resources configured as an uplink subband or guard band within an SBFD slot or SBFD symbol are not allocated for uplink transmission but are allocated for downlink reception is proposed.

According to an embodiment, whether to perform downlink reception through an uplink subband may be set through higher layer signaling. In this case, the UE may be explicitly configured or indicated by the base station on whether frequency resources set as an uplink subband for an SBFD slot or symbol may be allocated as downlink resources. In other words, for at least a portion of the resource blocks (RBs), physical resource blocks (PRBs), or common resource blocks (CRBs) configured as the uplink subband, the base station may allocate for transmission of a downlink radio channel such as PDCCH or PDSCH or downlink radio signal such as CSI-RS, PSS/SSS, PRS. Alternatively, the UE may be explicitly configured or indicated by the base station on whether to support transmission/reception of a downlink radio channel or downlink radio signal through the uplink subband based on the aforementioned configuration.

As an example of the explicit configuration or indication method, whether to support transmission through the uplink subband for all downlink radio channels or radio signals may be configured or indicated through a single information area. In this case, whether to support transmission through the uplink subband for all downlink radio channels or radio signals may be commonly configured or indicated according to the setting value or indication value of the single information area.

As another example of the explicit configuration or indication method, a separate information area may be configured for each downlink radio channel or radio signal or for each group of downlink radio channels or radio signals. In this case, whether to support transmission through the uplink subband may be configured or indicated separately for each downlink radio channel or downlink radio signal or for each group of downlink radio channels or radio signals. For example, whether to support PDSCH transmission through the uplink subband, whether to support PDCCH transmission, whether to support CSI-RS transmission, etc., may be configured or indicated separately through separate information areas.

As yet another example of the explicit configuration or indication method, the downlink transmission target through the uplink subband may be limited to a specific downlink radio channel or specific downlink radio signal. In this case, whether to support transmission through the uplink subband for the corresponding downlink radio channel or radio signal may be commonly configured or indicated through a single information area as described above. Alternatively, whether to support transmission through the uplink subband may be configured or indicated separately for each corresponding downlink radio channel or radio signal. For example, downlink transmission/reception through the uplink subband may be limited to only PDSCH, and whether to support PDSCH transmission through the uplink subband may be configured or indicated by the base station as described above.

Such an explicit configuration or indication method may be set through higher layer signaling such as UE-specific or cell-specific RRC signaling. Alternatively, the explicit configuration or indication method may be indicated through UE-specific or UE group-common physical layer control signaling (L1 control signaling).

If, as described above, downlink transmission resources for a downlink radio channel or radio signal that not allowed in the uplink subband according to explicit configuration or indication fully or partially overlap the uplink subband, the UE may drop reception of the corresponding downlink radio channel or radio signal.

According to another example, whether to perform downlink reception through the uplink subband may be determined based on frequency resource allocation information included in physical layer control signaling (L1 control signaling). In this case, whether downlink resources may be utilized for frequency resources within the uplink subband may be implicitly determined by the signaling method triggering the corresponding downlink transmission.

For example, when the downlink resources indicated by DCI transmitted through PDCCH include at least a portion of frequency resources belonging to the uplink subband, downlink reception through the corresponding uplink subband may be performed. For example, when frequency resources allocated through the frequency domain resource allocation information area of a downlink assignment DCI format transmitted through PDCCH for PDSCH transmission resource allocation to any UE by the base station include all or part of the uplink subband, the UE may prioritize the corresponding DCI to receive PDSCH through the corresponding uplink subband.

In this case, a DCI format capable of overriding the uplink subband configuration among the DL assignment DCI formats may be restricted. For example, it may be configured to perform downlink transmission with priority over the uplink subband configuration only for PDSCH allocation through DCI format 1_0. In other words, in the above-described example, the UE may expect reception through the uplink subband only for the PDSCH allocated through DCI format 1_0. In this case, if PDSCH resources allocated through other DCI formats fully or partially overlap the uplink subband, the UE may drop the reception of the corresponding PDSCH.

According to another embodiment, whether to perform downlink reception through the uplink subband may be indicated based on rate matching indication information included in physical layer control signaling (L1 control signaling). In other words, when downlink transmission including a portion of the frequency resources of the uplink subband is triggered by the base station, the UE may perform downlink reception for the area corresponding to the frequency resources of the downlink subband, and whether to receive within the frequency resources of the uplink subband may follow the rate matching configuration or indication information. In particular, the method may be applied when PDSCH resource allocation through DCI is performed.

Specifically, when configuring the uplink subband at the base station, the rate matching pattern for the uplink subband may be semi-statically set through higher-layer signaling that is UE-specific, cell-specific, or UE group-common. According to the configuration information, the UE may determine whether to perform rate matching for downlink transmission through the uplink subband.

As another method, a separate information area for indicating rate matching for the uplink subband, such as a UL subband rate matching indication, may be defined and transmitted by the base station through DCI. In this case, whether to include the information area for the DCI formats that the UE is configured to monitor may be set through higher-layer signaling specific that is UE-specific, cell-specific, or UE group-common.

According to another example, whether to perform downlink reception through the uplink subband may be determined based on whether fallback to downlink symbols or flexible symbols for SBFD symbols is indicated. In this case, fallback for SBFD symbols may be indicated through UE-group common physical layer control signaling.

In this case, for SBFD symbols or slots including the uplink subband, whether to support dynamic fallback to legacy symbols or slots set through the RRC message *'tdd-UL-DL-ConfigurationCommon'* for the existing cell-specific slot configuration may be set through the uplink subband property/type information area when configuring the uplink subband. The term "uplink subband property/type information area" may be interchangeable with alternative names, such as dynamic fallback indication information area, and the technical spirit of the disclosure is not limited by the name.

In the case of an uplink subband configured to support dynamic fallback, the UE may be indicated for dynamic fallback for SBFD symbols or slots through UE group-common DCI or UE-specific DCI. In this case, dynamic fallback for SBFD symbols or slots may be performed according to the above-described legacy symbol or slot configuration. In other words, when the legacy symbol or slot configuration for SBFD symbols or slots indicated for dynamic fallback is a downlink symbol or slot, the corresponding SBFD symbol or slot may fall back to a downlink symbol or slot and be used for operations related to downlink reception of the UE.

On the other hand, when the legacy symbol or slot configuration for SBFD symbols or slots indicated for dynamic fallback is a flexible symbol or slot, it may fall back to a flexible symbol or slot according to the above-described *'tdd-UL-DL-ConfigurationCommon'* and be used for the operations of the base station and UE accordingly. Alternatively, the configuration of UE-specific RRC signaling *'tdd-UL-DL-ConfigurationDedicated'* or slot format indication information through DCI format 2_0 may be further considered. In other words, when dynamic fallback is indicated for the UE, the UE may ultimately fallback to a downlink symbol/slot or flexible symbol/slot according to the legacy symbol or slot configuration finally set/indicated by the configuration of the separate *'tdd-UL-DL-ConfigurationDedicated'* for the UE or slot format indication information through DCI format 2_0, along with the configuration information according to the *'tdd-UL-DL-ConfigurationCommon'.*

A method of using an uplink subband configured in an SBFD slot or symbol for downlink transmission/reception has been described above. The above-described description may be substantially equally applied to determining whether to support downlink transmission/reception through a guard band configured between the uplink subband and the downlink subband.

According to the embodiments described above, downlink transmission/reception is performed efficiently in slots or symbols to which full-duplex communication is applied.

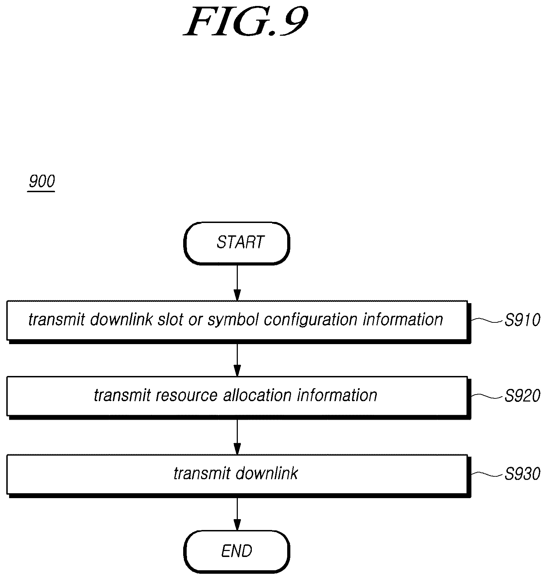

FIG. 9 illustrates a method 900 of a base station for performing downlink transmission according to an embodiment. The description made in connection with FIG. 8 may be omitted to avoid repetitive description and, in that case, the omitted content may be applied in substantially the same manner to the base station as long as it does not contradict the technical spirit of the invention.

Referring to FIG. 9, the base station may transmit configuration information for a downlink slot or downlink symbol (S910).

The time division duplex (TDD) divides and uses time-domain radio resources into a downlink slot and an uplink slot, and the base station may transmit the TDD configuration information to the UE to determine the format of the symbol. In this case, the TDD configuration information may include configuration information about the format of the slot and configuration information for determining the format of the symbol in the slot, and the corresponding information may be transmitted through higher layer signaling or physical layer signaling (e.g., L1 signaling).

The base station may transmit TDD configuration information for uplink-downlink slot configuration to the UE. In this case, the corresponding slot configuration may be configured on a per-cell basis through higher layer signaling, e.g., cell-specific RRC signaling. In other words, a downlink symbol, an uplink symbol, and a flexible symbol with undetermined transmission direction in a predetermined period may be configured through an RRC message for configuring a corresponding UL-DL slot.

Full-duplex communication is a technique in which the base station simultaneously performs downlink transmission and uplink reception in the same radio resource. The UE side may simultaneously perform downlink reception and uplink transmission. When the base station supports full-duplex communication based on non-overlapping subband, a specific frequency resource in the same symbol in the TDD carrier may be used for downlink transmission, and another frequency resource may be used for uplink reception.

In other words, for the TDD carrier, some frequency resources may be utilized for uplink transmission of the UE in any downlink slot or downlink symbol or may be utilized like a flexible symbol for downlink/uplink transition. For example, when an uplink subband is configured in any downlink slot, the uplink subband may be set at the center of the corresponding frequency band or at the edge of the corresponding frequency band. In this case, a guard band may be configured between the uplink subband and downlink subband (e.g., the remaining frequency band excluding the uplink subband and the guard band from the frequency band allocated to the UE) in the corresponding slot. The base station may transmit configuration information about the subband for full-duplex communication to the UE.

The downlink slot or the downlink symbol configured for the UE may include a subband full duplex (SBFD) symbol where an uplink subband for full-duplex communication is configured. In other words, an uplink subband may be configured for at least a portion of a downlink slot or downlink symbol set for an UE, and in this case, for the corresponding slot or symbol, an uplink subband, a downlink subband, and/or a guard band may be configured.

The base station may transmit, to the UE, configuration information for an SBFD slot or SBFD symbol, which is information for a downlink slot or symbol including an uplink subband, i.e., information for time resources. In other words, the base station may transmit information about the slot or symbol where an uplink subband is configured among downlink slots or symbols allocated to the UE.

Referring again to FIG. 9, the base station may transmit downlink resource allocation information including information for frequency resources allocated in a downlink slot or downlink symbol (S920).

The base station may transmit downlink resource allocation information including time resources and frequency resources to the UE for downlink transmission. Here, downlink transmission refers to an operation of transmitting a downlink radio channel or downlink radio signal including a downlink data channel (physical downlink shared channel (PDSCH)). If the technical spirit of the disclosure may be applied substantially identically, the downlink radio channel or downlink radio signal is not limited to a specific type.

Information about time resources included in the downlink resource allocation information may include information about a downlink slot or symbol. In this case, information about a slot or symbol set as an SBFD slot or SBFD symbol among the downlink slots or symbols may also be included.

Further, frequency resources included in the downlink resource allocation information may include frequency resources configured as an uplink subband. That is, the downlink resource allocation information may include information for frequency resources configured as an uplink subband. Further, the downlink resource allocation information may further include information for frequency resources configured as a guard band along with frequency resources set as an uplink subband.

Referring back to FIG. 9, the base station may perform downlink transmission based on the downlink resource allocation information (S930).

The base station may perform downlink transmission according to information about time resources and frequency resources included in the downlink resource allocation information. In this case, the base station may use frequency resources in an uplink subband, a guard band, or a downlink subband for downlink transmission among frequency resources allocated in an SBFD slot or SBFD symbol. Hereinafter, a specific method for efficiently using the frequency resources for downlink transmission when frequency resources configured as an uplink subband, a guard band within an SBFD slot or SBFD symbol are not allocated for uplink reception but are allocated for downlink transmission is proposed.

According to an example, whether to perform downlink transmission through an uplink subband may be set through higher layer signaling. In this case, the base station may explicitly configure or indicate, to the UE, whether frequency resources set as an uplink subband for an SBFD slot or symbol may be allocated as downlink resources. In other words, for at least a portion of the resource blocks (RBs), physical resource blocks (PRBs), or common resource blocks (CRBs) configured as the uplink subband, the base station may allocate for transmission of a downlink radio channel such as PDCCH or PDSCH or downlink radio signal such as CSI-RS, PSS/SSS, PRS. Alternatively, the base station may explicitly configure or indicate, to the UE, whether to support transmission/reception of a downlink radio channel or downlink radio signal through the uplink subband based the aforementioned configuration.

As an example of the explicit configuration or indication method, whether to support transmission through the uplink subband for all downlink radio channels or radio signals may be configured or indicated through a single information area. In this case, whether to support transmission through the uplink subband for all downlink radio channels or radio signals may be commonly configured or indicated according to the setting value or indication value of the single information area.

As another example of the explicit configuration or indication method, a separate information area may be configured for each downlink radio channel or radio signal or for each group of downlink radio channels or radio signals. In this case, whether to support transmission through the uplink subband may be configured or indicated separately for each downlink radio channel or downlink radio signal or for each group of downlink radio channels or radio signals. For example, whether to support PDSCH transmission through the uplink subband, whether to support PDCCH transmission, whether to support CSI-RS transmission, etc., may be configured or indicated separately through separate information areas.

As yet another example of the explicit configuration or indication method, the downlink transmission target through the uplink subband may be limited to a specific downlink radio channel or specific downlink radio signal. In this case, whether to support transmission through the uplink subband for the corresponding downlink radio channel or radio signal may be commonly configured or indicated through a single information area as described above. Alternatively, whether to support transmission through the uplink subband may be configured or indicated separately for each corresponding downlink radio channel or radio signal. For example, downlink transmission/reception through the uplink subband may be limited to only PDSCH, and whether to support PDSCH transmission through the uplink subband may be configured or indicated by the base station as described above.

Such an explicit configuration or indication method may be set through higher layer signaling such as UE-specific or cell-specific RRC signaling. Alternatively, the explicit configuration or indication method may be indicated through UE-specific or UE group-common physical layer control signaling (L1 control signaling).

If, as described above, downlink transmission resources for a downlink radio channel or radio signal that are not allowed in the uplink subband according to explicit configuration or indication fully or partially overlap the uplink subband, the UE may drop reception of the corresponding downlink radio channel or radio signal.

According to another example, whether to perform downlink transmission through the uplink subband may be determined based on frequency resource allocation information included in physical layer control signaling (L1 control signaling). In this case, whether downlink resources may be utilized for frequency resources within the uplink subband may be implicitly determined by the signaling method triggering the corresponding downlink transmission.

For example, when the downlink resources indicated by DCI transmitted through PDCCH include at least a portion of frequency resources belonging to the uplink subband, downlink transmission through the corresponding uplink subband may be performed. For example, when frequency resources allocated through the frequency domain resource allocation information area of a downlink assignment DCI format transmitted through PDCCH for PDSCH transmission resource allocation to any UE by the base station include all or part of the uplink subband, the base station may prioritize the corresponding DCI to transmit PDSCH through the corresponding uplink subband.

In this case, a DCI format capable of overriding the uplink subband configuration among the DL assignment DCI formats may be limited. For example, it may be configured to perform downlink transmission with priority over the uplink subband configuration only for PDSCH allocation through DCI format 1_0. In other words, in the above-described example, the UE may expect reception through the uplink subband only for the PDSCH allocated through DCI format 1_0. In this case, if PDSCH resources allocated through other DCI formats wholly or partially overlap the uplink subband, the UE may drop the reception of the corresponding PDSCH.

According to another embodiment, whether to perform downlink transmission through the uplink subband may be indicated based on rate matching indication information included in physical layer control signaling. In other words, when downlink transmission including a portion of the frequency resources of the uplink subband is triggered by the base station, the UE may perform downlink reception for the area corresponding to the frequency resources of the downlink subband, and whether to receive within the frequency resources of the uplink subband may follow the rate matching configuration or indication information. In particular, the method may be applied when PDSCH resource allocation through DCI is performed.

Specifically, when configuring the uplink subband at the base station, the rate matching pattern for the uplink subband may be semi-statically set through higher-layer signaling, that is UE-specific, cell-specific, or UE group-common. According to the setting information, the UE may determine whether to perform rate matching for downlink transmission through the uplink subband.

As another method, a separate information area for indicating rate matching for the uplink subband, such as a UL subband rate matching indication, may be defined and transmitted by the base station through DCI. In this case, whether to include the information area for the DCI formats set for monitoring by the UE may be set through higher-layer signaling that is UE-specific, cell-specific, or UE group-common.

According to another example, whether to perform downlink reception through the uplink subband may be determined based on whether fallback to downlink symbols or flexible symbols for SBFD symbols is indicated. In this case, fallback for SBFD symbols may be indicated through UE-group common physical layer control signaling.

In this case, for SBFD symbols or slots including the uplink subband, whether to support dynamic fallback to legacy symbols or slots set through the RRC message *'tdd-UL-DL-ConfigurationCommon'* for the existing cell-specific slot configuration may be set through the uplink subband property/type information area when configuring the uplink subband.

In the case of an uplink subband configured to support dynamic fallback, the base station may be indicated for dynamic fallback for SBFD symbols or slots through UE group-common DCI or UE-specific DCI. In this case, dynamic fallback for SBFD symbols or slots may be performed according to the above-described legacy symbol or slot configuration. In other words, when the legacy symbol or slot configuration for SBFD symbols or slots indicated for dynamic fallback is a downlink symbol or slot, the corresponding SBFD symbol or slot may fall back to a downlink symbol or slot and be used for operations related to downlink reception of the UE.

On the other hand, when the legacy symbol or slot configuration for SBFD symbols or slots indicated for dynamic fallback is a flexible symbol or slot, it may fall back to a flexible symbol or slot according to the above-described *'tdd-UL-DL-ConfigurationCommon'* and be used for the operations of the base station and UE accordingly. Alternatively, the configuration of UE-specific RRC signaling *'tdd-UL-DL-ConfigurationDedicated'* or slot format indication information through DCI format 2_0 may be further considered. In other words, when dynamic fallback is indicated for the UE, the base station may ultimately fallback to a downlink symbol/slot or flexible symbol/slot according to the legacy symbol or slot configuration finally set/indicated by the configuration of the separate *'tdd-UL-DL-ConfigurationDedicated'* for the UE or slot format indication information through DCI format 2_0, along with the configuration information according to the *'tdd-UL-DL-ConfigurationCommon'.*

A method of using an uplink subband configured in an SBFD slot or symbol for downlink transmission/reception has been described above. The above-described description may be substantially equally applied to determining whether to support downlink transmission/reception through a guard band configured between the uplink subband and the downlink subband.

According to the embodiments described above, downlink transmission/reception is effectively performed within slots or symbols to which full-duplex communication is applied.

Hereinafter, more embodiments related to the method for transmitting/receiving a downlink control channel in full-duplex communication are described in detail with reference to related drawings.

The disclosure proposes a method for configuring downlink control channel transmission/reception resources for a UE in any base station/cell where an uplink (UL) subband or downlink (DL) subband configuration has been made to support full-duplex communication in a wireless mobile communication system.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots according to the distribution ratio of uplink traffic and downlink traffic. However, this limitation of the uplink slot negatively affects coverage and latency. Full-duplex communication may be applied as a technology for addressing such issues.

Specifically, full-duplex communication is a technique in which a gNB (e.g., a base station) simultaneously performs DL transmission and UL reception in the same radio resource. The UE side may simultaneously perform DL reception and UL transmission as well. In other words, both the base station and the UE may support full duplex. However, unlike the base station, for which self-interference cancellation is structurally easy, in the UE, DL reception performance is prone to be affected by self-interference of UL transmission signals. Therefore, it is generally considered that the base station operates in full-duplex communication and the UE operates in half-duplex communication. Further, non-overlapping subband full duplex method may be considered, where the base station reduces self-interference by using separate frequency resources for simultaneous DL transmission and UL reception instead of using the same resource.

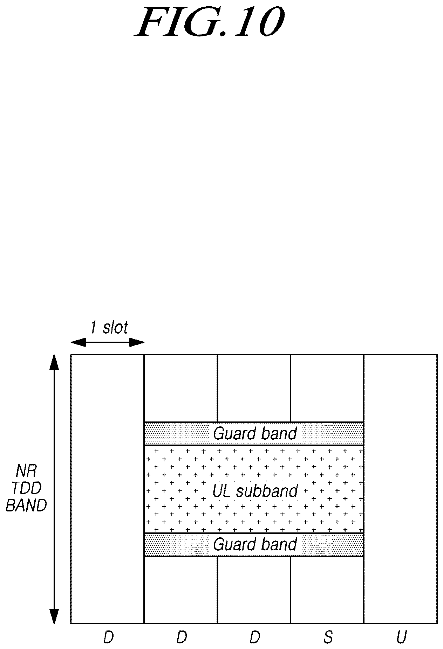

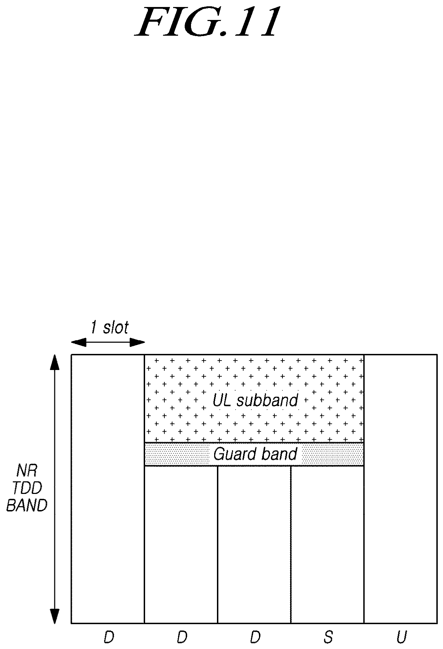

In other words, FIGS. 10 and 11 illustrate an example in which DL slots and UL slots are configured in a ratio of 4:1 in any NR frequency band. However, some symbols of the last DL slot may be a special slot including a flexible symbol for DL/UL transition. As described above, when a time division duplex (TDD) configuration is implemented, an uplink subband for supporting UL transmission of the UE may be configured in some (or all) DL slots of the corresponding DL slots. When the UL subband is set in any DL slot, the UL subband may be configured in the center of the corresponding frequency band as shown in FIG. 10. Or the UL subband may be configured at the edge of the corresponding frequency band as shown in FIG. 11. In this case, a guard band may be configured between the UL subband and the downlink subband (DL subband) in the corresponding slot.

The disclosure proposes a method for configuring a BWP when any base station/network supports non-overlapping subbandfull duplex and accordingly transmitting/receiving radio channels (e.g., PDCCH/PDSCH and PUSCH/PUCCH) and uplink/downlink radio signals (DM-RS, CSI-RS, SRS, and PSS/SSS) of the base station and the UE. However, the description of the disclosure may be substantially identically applied to other various full-duplex application scenarios. For example, the full duplex application scenario may include a full duplex operation in an unpaired spectrum and a full duplex operation in a downlink (DL) frequency band or an uplink (UL) frequency band of a paired spectrum. Further, as described above, the description of the disclosure may be substantially identically applied to a scenario in which non-overlapping subband full duplex or pure full duplex (i.e., DL transmission and UL reception simultaneously in the same frequency resource) is supported only on the base station side, and a half duplex operation is performed in the UE. Further, the description of the disclosure may be substantially identically applied even when not only the base station but also the UE supports non-overlapping subband full duplex or pure full duplex.

The uplink-downlink (UL-DL) slot configuration defined in NR is defined to be performed in units of cells through cell-specific RRC signaling. In other words, patterns of DL symbols, UL symbols, and flexible symbols of a predetermined period are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Or, a method for indicating a dynamic slot format through a UE-group common PDCCH has also been defined. To that end, NR also supports a slot format indication method in a dynamic form through DCI format 2_0.

According to the above-described slot configuration method, any one symbol may be configured or indicated as one of DL, UL, or Flexible. FIG. 10 illustrates an example in which any slot format is set as DDDSU through the typical slot configuration. D is a down link slot, which means that all OFDM symbols constituting the corresponding slot are set as DL. U is an uplink slot, which means that all OFDM symbols constituting the corresponding slot are set as UL. S is a special slot, which means a slot including a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within any one TDD carrier, one symbol was set or indicated as only one of DL, UL, or flexible.

However, when the UL subband is configured in any DL slot as shown in FIGS. 10 and 11, DL transmission or UL reception may occur simultaneously for each frequency resource in the corresponding symbol. As described above, a DL slot or symbol including a UL subband or a UL slot or symbol including a DL subband is referred to as an SBFD slot or an SBFD symbol in the disclosure.

From the base station's perspective, the radio resources of the frequency band corresponding to the UL subband are allocated for UL transmission of UEs, and the radio resources of the frequency band corresponding to the DL subband (the remaining frequency band other than the UL subband and the guard band in FIGS. 10 and 11) are allocated for DL transmission of UEs. In particular, the UL transmission of the UE in the SBFD slot is limited to the allocated UL subband radio resource. On the other hand, when a UL subband is configured in the SBFD slot, particularly in a slot configured or indicated as a DL slot by the existing slot configuration, a definition is required as to whether to limit the base station's DL transmission to the DL subband in the slot.

The disclosure proposes a method for DL transmission/reception resource allocation in an SBFD slot where a UL subband is configured as described above. In particular, when radio resources of the UL subband or guardband are not allocated for UL transmission of the UE in the slot, a method for efficiently using those resources for downlink transmission by the base station and downlink reception by the UE is proposed.

### Embodiment 1: Method for using UL subband resources based on explicit configuration or indication

When the base station configures a UL subband for SBFD operation in any slot, it may be defined to explicitly configure or indicate whether DL transmission resource allocation is possible for the frequency resources configured as the UL subband. In other words, for a resource block (RB), physical resource block (PRB), or common resource block (CRB) configured as a UL subband, it may be defined for the base station to allocate it for downlink radio channels such as PDCCH or PDSCH or downlink radio signal transmissions such as CSI-RS, PSS/SSS, PRS, or the like. or based on the allocation, explicitly configure or indicate whether to support downlink radio channel or signal transmission through the UL subband.

As an example of the explicit configuration or indication method, it may be defined that whether to support transmission through the UL subband for all downlink radio channels or radio signals may be configured or indicated through a single information area. In this case, whether to support transmission through the UL subband for all downlink radio channels or radio signals may be commonly configured or indicated according to configured or indicated value of the single information area, and applied.

As another example of the explicit configuration or indication method, it may be defined that separate information areas may be defined for each downlink radio channel or signal, or for each group of downlink radio channels or signals, to separately configure or indicate whether to support transmission through the UL subband for each downlink radio channel, each downlink radio signal, or each group of downlink radio channels or radio signals. For example, it may be defined to separately configure or indicate using distinct information areas whether to support PDSCH transmission, PDCCH transmission, CSI-RS transmission, etc., through the UL subband.

As another example of the explicit configuration or indication method, it may be defined to limit the DL transmission target through the UL subband to specific downlink radio channels or signals, and to configure or indicate whether to support transmission through the UL subband for the corresponding downlink radio channels or signals through a single information area as described above, or separately for each corresponding downlink radio channel or signal. For example, DL transmission through the UL subband may be limited to PDSCH only, and whether to support PDSCH transmission through a UL subband may be defined to be configured or indicated by the base station as described above.

The above-described explicit configuration or indication method may be configured through UE-specific or cell-specific RRC signaling or indicated through UE-specific or UE group-common L1 control signaling.

As described above, when the transmission resources of a downlink radio channel or signal not allowed in any UL subband fully or partially overlap the UL subband according to the explicit configuration or indication, the UE may be defined to drop reception for the downlink radio channel or radio signal.

### Embodiment 2: Method for using UL subband resources based on implicit configuration or indication

It may be defined that whether DL transmission resources may be utilized for frequency resources within a UL subband may be implicitly determined by the signaling method that triggers the DL transmission. For example, when DL transmission resources triggered through downlink control information (DCI) transmitted through PDCCH include frequency resources within the UL subband, it may be defined to perform DL transmission through the UL subband. In other words, when semi-static UL subband configuration is performed by the base station (i.e., when UL subband configuration is performed through RRC signaling), the base station may dynamically override the frequency resources of the UL subband for DL transmission through DCI. For example, it may be defined that when the frequency resources allocated through the frequency domain resource assignment information area of DL assignment DCI format (e.g., DCI format 1_0, 1_1, or 1_2) transmitted through the PDCCH for PDSCH transmission resource allocation to any UE by the base station includes all or part of the UL subbands, the UE receives the PDSCH through the UL subband by prioritizing the DCI.

However, in this case, the DCI format capable of overriding the UL subband configuration among the DL assignment DCI formats may be restricted. For example, it may be defined to allow transmission by overriding the UL subband configuration only for PDSCH allocation through DCI format 1_0. In other words, in the above-described example, the UE may expect reception through the UL subband only for the PDSCH allocated through DCI format 1_0, and it may be defined to drop the reception of the PDSCH when the PDSCH resources allocated through other DCI formats fully or partially overlap the UL subband.

### Embodiment 3: Definition of UL subband specific rate matching pattern

As to whether to perform DL transmission through UL subband resources, it may be defined to configure or indicate whether the base station performs rate matching on the DL transmission resource allocation through the UL subband through rate matching configuration or indication. In other words, unlike embodiment 1 or embodiment 2, when DL transmission including some frequencies of the UL subband is triggered by the base station, the UE may perform the corresponding DL reception operation for the area corresponding to the DL subband frequency resources, and whether to receive within the frequency resources of the UL subband may follow the rate matching configuration or indication information. In particular, this method may be applied when PDSCH resource allocation is performed through DCI.

Specifically, when configuring the UL subband at the base station, it may be defined to semi-statically configure the rate matching pattern for the UL subband through UE-specific, cell-specific, or UE-group common higher layer signaling. According to the configuration information, the UE may determine whether to perform rate matching for DL transmission through the UL subband. However, as in embodiment 1, the rate matching pattern configuration for the UL subband may be applied equally to all DL transmissions, or separate rate matching patterns may be configured and applied for each downlink radio channel or downlink radio signal, or rate matching may be applied selectively to specific DL transmissions (e.g., PDSCH).

As another method, it may be defined that a separate information area (e.g., UL subband rate matching indicator) for rate matching indication for the UL subband may be defined for the base station to transmit it through the DCI. In this case, it may be defined to set whether to include the UL subband rate matching indicator information area for the DCI formats that the UE is configured to monitor through UE-specific, cell-specific, or UE-group specific higher layer signaling.

Hereinafter, an example is presented regarding the operation of the UE and base station according to the specific combination of the embodiments proposed above for using the frequency band configured as a UL subband for downlink transmission/reception.

As proposed in embodiment 1, when any base station configures a UL subband for any UE, it may include property/type information of the UL subband. The property/type information of the UL subband may be set as semi-static or dynamic according to whether the radio resources (time resources and frequency resources) configured as a UL subband may be dynamically allocated for downlink transmission for any UE at the base station. In other words, in the case of a UL subband set as semi-static by the base station, the UE may not expect reception of the DL transmission of the base station through the UL subband. On the other hand, in the case of a UL subband set as dynamic, the UE may expect DL transmission of the base station through the UL subband. In this case, when DL transmission is performed through the UL subband resource set as dynamic in any slot or symbol, the base station may additionally transmit the indication information to the UE through a separate UE-group common DCI or indicate, to the UE, DL reception through the UL subband through the explicit method by defining a rate matching indication information area for the UL subband in the existing DL assignment DCI (i.e., DCI 1_0, 1_1, or 1_2) or implicitly through the frequency resource/time resource allocation information of the existing DL assignment DCI (i.e., DCI 1_0, 1_1, or 1_2), as proposed in embodiments 1, 2, and 3 described above.

Alternatively, similarly to the example, when configuring any UL subband, it may include the property/type information (set as semi-static or dynamic) of the UL subband, and based thereon, whether to perform DL transmission/reception through any UL subband radio resources may be indicated by the base station through a UE-group common DCI or a UE-specific DCI. Another example of defining specific information areas for this operation and the corresponding base station configuration/UE interpretation method are as follows.

The base station may be defined to operate with the base station configuration and UE interpretation regarding whether the SBFD symbol including the UL subband may fall back to the legacy symbol configuration (i.e., DL or flexible) according to the existing cell-specific UL-DL slot configuration or whether to monitor a separate UE-group common DCI format therefor or whether UE-specific DCI monitoring is performed (in this case, whether the existing UE-specific DCI format includes an information area for indicating the fallback) through the property/type information area of the UL subband. In other words, whether to support dynamic fallback with the legacy symbol or slot configuration (e.g., DL symbol or slot and flexible symbol or slot) configured through the RRC message *'tdd-UL-DL-ConfigurationCommon'* for the existing cell-specific UL-DL slot configuration in any SBFD symbol or slot including any UL subband may be set by the base station through the UL subband property/type information area (or dynamic fallback indication information area. As such, the corresponding information area may be referred to by another name, and the embodiments are not limited by the name) when configuring the UL subband. Accordingly, in the case of a UL subband configured to support dynamic fallback, as described above, the base station may indicate dynamic fallback for any SBFD symbol or slot through UE-group common DCI or UE-specific DCI. In this case, the dynamic fallback for the corresponding SBFD symbol or slot may follow the symbol or slot configuration according to the RRC message *'tdd-UL-DL-ConfigurationCommon'* for cell-specific UL-DL slot configuration. In other words, when any SBFD symbol or slot indicated for dynamic fallback by the base station is a symbol or slot set to DL by the RRC message *'tdd-UL-DL-ConfigurationCommon'* for the existing cell-specific UL-DL slot configuration, the corresponding SBFD symbol or slot may fall back to a DL symbol or slot to support the corresponding UE's DL reception-related operation.

On the other hand, when it is a flexible symbol or slot by *'tdd-UL-DL-ConfigurationCommon',* it may fall back to a flexible symbol or slot according to *'tdd-UL-DL-ConfigurationCommon'* regardless of the configuration of UE-specific RRC signaling 'tdd-UL-DL-ConfigurationDedicated' or slot format indication information through DCI format 2_0 to support the corresponding base station and UE operation. Alternatively, the dynamic fallback may include up to the slot format indication information according to the UE-specific tdd-UL-DL configuration or DCI format 2_0. In other words, when dynamic fallback is indicated for any UE in any SBFD symbol or slot through the UE-group common DCI or UE-specific DCI, the UE may ultimately fallback to a downlink symbol/slot or flexible symbol/slot according to the legacy symbol or slot configuration finally set/indicated by the base station by the configuration of the separate *'tdd-UL-DL-ConfigurationDedicated'* for the UE or slot format indication information through DCI format 2_0, along with the cell-specific symbol/slot configuration information according to the *'tdd-UL-DL-ConfigurationCommon'.* Accordingly, each may support the above-described DL reception-related operation or flexible symbol/slot operation.

However, the support for DL transmission of the base station and DL reception operation of the corresponding UE through frequency resources (i.e., UL subband or guardband(s)) other than DL subband(s) in the SBFD symbol according to the embodiments may be limited to UEs meeting all (or some) of the following conditions.
Condition 1. When the corresponding UL subband or guardband is included in the active downlink bandwidth part (active DL BWP) of the UE,
Condition 2. When at least the frequency resources belonging to the UL subband or guardband allocated for DL reception are included in the active DL BWP of the UE.
Condition 3. When, in the corresponding SBFD symbol, the UE is pre-configured to perform a DL reception operation by the base station through RRC signaling, or when it is indicated through L1 control signaling,
Condition 4. When, in the corresponding SBFD symbol, the UE is pre-configured to perform a flexible symbol operation by the base station through RRC signaling, or when it is indicated through L1 control signaling.

Further, the above-described embodiments 1, 2, and 3 may be equally applied to determine whether to support DL transmission through a guardband configured between the UL subband and DL subband in FIGS. 10 and 11. In other words, separately from the method of setting or indicating whether to support DL transmission through the UL subband, whether to support DL transmission through the guardband may be set or indicated through embodiments 1, 2, and 3 described above. Alternatively, DL transmission support for all UL subbands and guardbands configured in any slot may be commonly confirmed or indicated according to embodiments 1, 2, and 3 and applied to the UE.

With regard to embodiments 1 to 3 described above, each embodiment is included in the scope of the disclosure according to the disclosure, not only in the case of being independent, but also in the case of all examples constituted of a combination of embodiments.

Hereinafter, configurations of a UE and a base station that may implement all or some of the embodiments described above in connection with FIGS. 1 to 11 are described with reference to the drawings. To avoid repetition, some of the above-described description may be omitted; however, the omitted content may be applied in substantially the same manner to the following description as long as it does not go against the technical spirit of the invention.

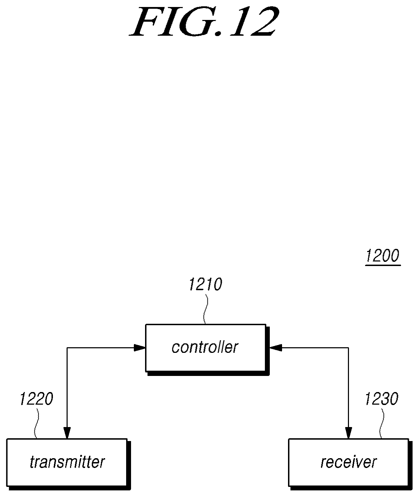

FIG. 12 is a block diagram illustrating a UE 1200 according to an embodiment.

Referring to FIG. 12, a UE 1200 according to another embodiment includes a transmitter 1220, a receiver 1230, and a controller 1210 controlling operations of the transmitter and the receiver.

The controller 1210 controls the overall operation of the UE 1200 according to the method for performing downlink reception in full-duplex communication required to the present invention described above.

The controller 1210 may receive configuration information for a downlink slot or a downlink symbol. The controller 1210 may receive TDD configuration information from a base station to determine the format of the symbol. In this case, the TDD configuration information may include configuration information for a slot format and configuration information for determining a symbol format in a slot, and the corresponding information may be received through higher layer signaling or physical layer L1 signaling.

The controller 1210 may receive TDD configuration information for uplink-downlink slot configuration from the base station. In this case, the corresponding slot configuration may be configured on a per-cell basis through higher layer signaling, e.g., cell-specific RRC signaling. In other words, a downlink symbol, an uplink symbol, and a flexible symbol with an undetermined transmission direction during a predetermined period may be configured through an RRC message for configuring a corresponding UL-DL slot.

For the TDD carrier, some frequency resources may be utilized for uplink transmission of the UE in any downlink slot or downlink symbol or may be utilized like a flexible symbol for downlink/uplink transition. In this case, a guard band may be configured between the uplink subband and downlink subband (e.g., the remaining frequency band excluding the uplink subband and guard band from the frequency bands allocated to the UE) in the corresponding slot. The controller 1210 may receive configuration information about a subband for full-duplex communication from the base station.

As such, a downlink slot or symbol including an uplink subband is referred to as a subband full duplex (SBFD) slot or SBFD symbol in the disclosure. In other words, the downlink slot or the downlink symbol configured for the UE may include a subband full duplex (SBFD) symbol where an uplink subband for full-duplex communication is configured. In other words, an uplink subband may be configured for at least a portion of a downlink slot or downlink symbol set for an UE, and in this case, for the corresponding slot or symbol, an uplink subband, a downlink subband, and/or a guard band may be configured.

The controller 1210 may receive configuration information for an SBFD slot or SBFD symbol, which is information for a downlink slot or symbol including an uplink subband, i.e., information for time resources. In other words, the controller 1210 may receive information about the slot or symbol where an uplink subband is configured among downlink slots or symbols allocated to the UE.

The controller 1210 may receive downlink resource allocation information including information for frequency resources allocated in the downlink slot or the downlink symbol. The controller 1210 may receive downlink resource allocation information including information for time resources and frequency resources from the base station for downlink reception.

The information about time resources included in the downlink resource allocation information may include information about a downlink slot or symbol. In this case, information about a slot or symbol set as an SBFD slot or SBFD symbol among the downlink slots or symbols may also be included.

Further, information for frequency resources included in the downlink resource allocation information may include frequency resources configured as an uplink subband. In other words, information about frequency resources included in the downlink resource allocation information may include information about frequency resources configured as an uplink subband. Further, information for frequency resources included in the downlink resource allocation information may further include information for frequency resources configured as a guard band along with frequency resources set as an uplink subband.

The controller 1210 may perform downlink reception based on the downlink resource allocation information. The controller 1210 may perform downlink reception based on the information about time resources and frequency resources included in the downlink resource allocation information. In this case, the controller 1210 may use frequency resources of an uplink subband, a guard band, or a downlink subband, for downlink reception among frequency resources allocated in an SBFD slot or SBFD symbol based on the downlink resource allocation information.

According to an example, whether to perform downlink reception through an uplink subband may be configured through higher layer signaling. In this case, the controller 1210 may be explicitly configured or indicated by the base station on whether frequency resources set as an uplink subband for an SBFD slot or symbol may be allocated as downlink resources. Alternatively, the controller 1210 may be explicitly configured or indicated by the base station on whether to support transmission/reception of a downlink radio channel or downlink radio signal through the uplink subband based thereon.

As an example of the explicit configuration or indication method, whether to support transmission through the uplink subband for all downlink radio channels or radio signals may be configured or indicated through a single information area. In this case, whether to support transmission through the uplink subband for all downlink radio channels or radio signals may be commonly configured or indicated according to the setting value or indication value of the single information area.

As another example of the explicit configuration or indication method, a separate information area may be configured for each downlink radio channel or radio signal or for each group of downlink radio channels or radio signals. In this case, whether to support transmission through the uplink subband may be configured or indicated separately per downlink radio channel, downlink radio signal, or group thereof.

As yet another example of the explicit configuration or indication method, the downlink transmission target through the uplink subband may be limited to a specific downlink radio channel or specific downlink radio signal. In this case, whether to support transmission through the uplink subband for the corresponding downlink radio channel or radio signal may be configured or indicated in a common manner through a single information area as described above. Alternatively, whether to support transmission through the uplink subband may be configured or indicated separately for each corresponding downlink radio channel or radio signal.

Such an explicit configuration or indication method may be set through higher layer signaling such as UE-specific or cell-specific RRC signaling. Alternatively, the explicit configuration or indication method may be indicated through UE-specific or UE group-common physical layer control signaling (L1 control signaling).

If, as described above, downlink transmission resources for a downlink radio channel or radio signal that are not allowed in the uplink subband according to explicit configuration or indication fully or partially overlap the uplink subband, the controller 1210 may drop reception of the corresponding downlink radio channel or radio signal.

According to another example, whether to perform downlink reception through the uplink subband may be determined based on frequency resource allocation information included in physical layer control signaling (L1 control signaling). In this case, whether downlink resources may be utilized for frequency resources within the uplink subband may be implicitly determined by the signaling method triggering the corresponding downlink transmission.

For example, when the downlink resources indicated by DCI transmitted through PDCCH include at least a portion of frequency resources within the uplink subband, downlink reception through the corresponding uplink subband may be performed. For example, when frequency resources allocated through the frequency domain resource allocation information area of a downlink assignment DCI format transmitted through PDCCH for PDSCH transmission resource allocation to any UE by the base station include all or part of the uplink subband, the controller 1210 may prioritize the corresponding DCI to receive PDSCH through the corresponding UL subband.

In this case, a DCI format capable of overriding the uplink subband configuration among the DL assignment DCI formats may be restricted. For example, it may be configured to perform downlink transmission with priority over the uplink subband configuration only for PDSCH allocation through DCI format 1_0. In other words, in the above-described example, the controller 1210 may expect reception through the uplink subband only for the PDSCH allocated through DCI format 1_0. In this case, if PDSCH resources allocated through other DCI formats fully or partially overlap the uplink subband, the controller 1210 may drop the reception of the corresponding PDSCH.

According to another embodiment, whether to perform downlink reception through the uplink subband may be indicated based on rate matching indication information included in physical layer control signaling. In other words, when downlink transmission including a portion of the frequency resources of the uplink subband is triggered by the base station, the controller 1210 may perform downlink reception for the area corresponding to the frequency resources of the downlink subband, and whether to receive within the frequency resources of the uplink subband may follow the rate matching configuration or indication information. In particular, the method may be applied when PDSCH resource allocation through DCI is performed.

Specifically, when configuring the uplink subband at the base station, the rate matching pattern for the uplink subband may be semi-statically set through higher-layer signaling specific to the UE, specific to the cell, or common to the UE group. According to the configuration information, the controller 1210 may determine whether to perform rate matching for downlink transmission through the uplink subband.

As another method, a separate information area for indicating rate matching for the uplink subband, such as a UL subband rate matching indication, may be defined and transmitted by the base station through DCI. In this case, whether to include the information area in the DCI formats that the UE is configured to monitor may be set through higher-layer signaling specific to the UE, specific to the cell, or common to the UE group.

According to another example, whether to perform downlink reception through the uplink subband may be determined based on whether fallback to downlink symbols or flexible symbols for SBFD symbols is indicated. In this case, fallback for SBFD symbols may be indicated through UE-group common physical layer control signaling.

In this case, for SBFD symbols or slots including the uplink subband, whether to support dynamic fallback to legacy symbols or slots set through the RRC message *'tdd-UL-DL-ConfigurationCommon'* for the existing cell-specific slot configuration may be set through the uplink subband property/type information area as part of the uplink subband configuration.

In the case of an uplink subband configured to support dynamic fallback, the controller 1210 may be informed of the dynamic fallback for SBFD symbols or slots through UE group-common DCI or UE-specific DCI. In this case, dynamic fallback for SBFD symbols or slots may be performed according to the above-described legacy symbol or slot configuration. In other words, when the legacy symbol or slot configuration for SBFD symbols or slots indicated for dynamic fallback is a downlink symbol or slot, the corresponding SBFD symbol or slot may fall back to a downlink symbol or slot and be used for operations related to downlink reception of the UE.

On the other hand, when the legacy symbol or slot configuration for SBFD symbols or slots indicated for dynamic fallback is a flexible symbol or slot, it may fall back to a flexible symbol or slot according to the above-described *'tdd-UL-DL-ConfigurationCommon'* and be used for the operations of the base station and UE accordingly. Alternatively, the configuration of UE-specific RRC signaling *'tdd-UL-DL-ConfigurationDedicated'* or slot format indication information through DCI format 2_0 may be further considered. In other words, when dynamic fallback is indicated for the UE, the controller 1210 may ultimately fall back to a downlink symbol/slot or flexible symbol/slot according to the legacy symbol or slot configuration finally configured or indicated through the configuration of the separate *'tdd-UL-DL-ConfigurationDedicated'* for the UE or slot format indication information through DCI format 2_0, along with the configuration information based on the *'tdd-UL-DL-ConfigurationCommon'.*

A method of using an uplink subband configured in an SBFD slot or symbol for downlink transmission/reception has been described above. The above-described description may be equally or similarly applied to determining whether to support downlink transmission/reception through a guard band configured between the uplink subband and the downlink subband.

According to the embodiments described above, downlink transmission/reception may be performed efficiently in slots or symbols to which full-duplex communication is applied.

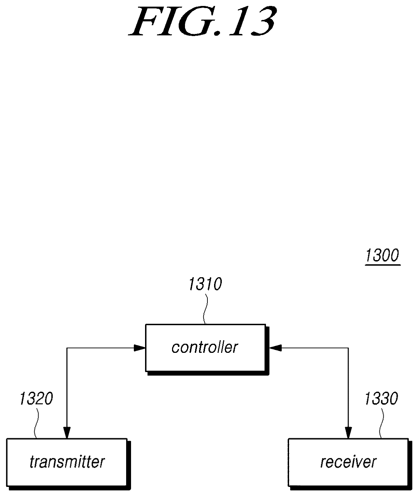

FIG. 13 is a block diagram illustrating a base station 1300 according to an embodiment.

Referring to FIG. 13, a base station 1300 according to an embodiment includes a transmitter 1320, a receiver 1330, and a controller 1310 controlling operations of the transmitter and the receiver.

The controller 1310 controls the overall operation of the base station 1300 according to the method for performing downlink transmission in full-duplex communication required to the embodiments described above. The transmitter 1320 transmits downlink control information and data or messages to the UE via a corresponding channel. The receiver 1330 receives uplink control information and data or messages from the UE via a corresponding channel.

The controller 1310 may transmit configuration information for a downlink slot or a downlink symbol. The controller 1310 may transmit TDD configuration information for uplink-downlink slot configuration to the UE. In this case, the corresponding slot configuration may be configured on a per-cell basis through higher layer signaling, e.g., cell-specific RRC signaling. In other words, a downlink symbol, an uplink symbol, and a flexible symbol having an undetermined transmission direction within a predetermined period may be configured through an RRC message for configuring a corresponding UL-DL slot.

For the TDD carrier, some frequency resources may be utilized for uplink transmission of the UE in any downlink slot or downlink symbol, or may be utilized like a flexible symbol for downlink/uplink transition. In this case, a guard band may be configured between the uplink subband and downlink subband (e.g., the remaining frequency band other than the uplink subband and guard band among the frequency bands allocated to the UE) in the corresponding slot. The controller 1310 may transmit configuration information about the subband for full-duplex communication to the UE.

The downlink slot or the downlink symbol configured for the UE may include a subband full duplex (SBFD) symbol where an uplink subband for full-duplex communication is configured. In other words, an uplink subband may be configured for at least a portion of a downlink slot or downlink symbol set for an UE, and in this case, for the corresponding slot or symbol, an uplink subband, a downlink subband, and/or a guard band may be configured.

The controller 1310 may transmit, to the UE, configuration information for an SBFD slot or SBFD symbol, which is information for a downlink slot or symbol including an uplink subband, i.e., information for time resources. In other words, the controller 1310 may transmit information about the slot or symbol in which an uplink subband is configured among downlink slots or symbols allocated to the UE.

The controller 1310 may transmit downlink resource allocation information including information about a frequency resource allocated in the downlink slot or the downlink symbol. The controller 1310 may transmit downlink resource allocation information including time resources and frequency resources to the UE for downlink transmission.

Information about time resources included in the downlink resource allocation information may include information about a downlink slot or symbol. In this case, information about a slot or symbol set as an SBFD slot or SBFD symbol among the downlink slots or symbols may also be included.

Further, frequency resources included in the downlink resource allocation information may include frequency resources set as an uplink subband. In other words, information about frequency resources included in the downlink resource allocation information may include information about frequency resources set as an uplink subband. Further, frequency resources included in the downlink resource allocation information may further include frequency resources set as a guard band along with frequency resources set as an uplink subband.

The controller 1310 may perform downlink transmission based on the downlink resource allocation information. The controller 1310 may perform downlink transmission according to information about time resources and frequency resources included in the downlink resource allocation information. In this case, the controller 1310 may use frequency resources of an uplink or guard band subband, as well as frequency resources of a downlink subband, for downlink transmission among frequency resources allocated in an SBFD slot or SBFD symbol.

According to an example, whether to perform downlink transmission through an uplink subband may be configured through higher layer signaling. In this case, the controller 1310 may explicitly configure or indicate, to the UE, whether frequency resources set as an uplink subband for an SBFD slot or symbol may be allocated as downlink resources. Alternatively, the controller 1310 may explicitly configure or indicate, to the UE, whether to support transmission/reception of a downlink radio channel or downlink radio signal through the uplink subband based thereon.

As an example of the explicit configuration or indication method, whether to support transmission through the uplink subband for all downlink radio channels or radio signals may be configured or indicated through a single information area. In this case, whether to support transmission through the uplink subband for all downlink radio channels or radio signals may be commonly configured or indicated according to the setting value or indication value of the single information area.

As another example of the explicit configuration or indication method, a separate information area may be configured for each downlink radio channel or radio signal or for each group of downlink radio channels or radio signals. In this case, whether to support transmission through the uplink subband may be configured or indicated separately for each downlink radio channel or downlink radio signal or for each group of downlink radio channels or radio signals.

As yet another example of the explicit configuration or indication method, the downlink transmission target through the uplink subband may be limited to a specific downlink radio channel or specific downlink radio signal. In this case, whether to support transmission through the uplink subband for the corresponding downlink radio channel or radio signal may be commonly configured or indicated through a single information area as described above. Alternatively, whether to support transmission through the uplink subband may be configured or indicated separately for each corresponding downlink radio channel or radio signal.

Such an explicit configuration or indication method may be configured through higher layer signaling such as UE-specific or cell-specific RRC signaling. Alternatively, the explicit configuration or indication method may be indicated through UE-specific or UE group-common physical layer control signaling (L1 control signaling).

If, as described above, downlink transmission resources for a downlink radio channel or radio signal that is not allowed in the uplink subband according to explicit configuration or indication wholly or partially overlap the uplink subband, the UE may drop reception of the corresponding downlink radio channel or radio signal.

According to another example, whether to perform downlink transmission through the uplink subband may be determined based on frequency resource allocation information included in physical layer control signaling (L1 control signaling). In this case, whether downlink resources may be utilized for frequency resources belonging to the uplink subband may be implicitly determined by the signaling method triggering the corresponding downlink transmission.

For example, when the downlink resources indicated by DCI transmitted through PDCCH include at least a portion of frequency resources belonging to the uplink subband, downlink transmission through the corresponding uplink subband may be performed. For example, when frequency resources allocated through the frequency domain resource allocation information area of a downlink assignment DCI format transmitted through PDCCH for PDSCH transmission resource allocation for any UE from the base station include portion or all of the uplink subband, the controller 1310 may prioritize the corresponding DCI to transmit PDSCH through the corresponding uplink subband.

In this case, a DCI format capable of overriding the uplink subband configuration among the DL assignment DCI formats may be limited. For example, it may be configured to perform downlink transmission with priority over the uplink subband configuration only for PDSCH allocation through DCI format 1_0. In other words, in the above-described example, the UE may expect reception through the uplink subband only for the PDSCH allocated through DCI format 1_0. In this case, if PDSCH resources allocated through other DCI formats wholly or partially overlap the uplink subband, the UE may drop the reception of the corresponding PDSCH.

According to another embodiment, whether to perform downlink transmission through the uplink subband may be indicated based on rate matching indication information included in physical layer control signaling. In other words, when downlink transmission including a portion of the frequency resources of the uplink subband is triggered by the base station, the UE may perform downlink reception for the area corresponding to the frequency resources of the downlink subband, and whether to receive in the frequency resources belonging to the uplink subband may follow the rate matching configuration or indication information. In particular, the method may be applied when PDSCH resource allocation through DCI is performed.

Specifically, when configuring the uplink subband at the base station, the rate matching pattern for the uplink subband may be semi-statically set through higher-layer signaling specific to the UE, specific to the cell, or common to the UE group. According to the setting information, the UE may determine whether to perform rate matching for downlink transmission through the uplink subband.

As another method, a separate information area for indicating rate matching for the uplink subband, such as a UL subband rate matching indication, may be defined and transmitted by the base station through DCI. In this case, whether to include the information area for the DCI formats set for monitoring by the UE may be set through higher-layer signaling specific to the UE, specific to the cell, or common to the UE group.

According to another example, whether to perform downlink reception through the uplink subband may be determined based on whether fallback to downlink symbols or flexible symbols for SBFD symbols is indicated. In this case, fallback for SBFD symbols may be indicated through UE-group common physical layer control signaling.

In this case, for SBFD symbols or slots including the uplink subband, whether to support dynamic fallback to legacy symbols or slots set through the RRC message *'tdd-UL-DL-ConfigurationCommon'* for the existing cell-specific slot configuration may be set through the uplink subband property/type information area when configuring the uplink subband.

In the case of an uplink subband configured to support dynamic fallback, the controller 1310 may be indicated for dynamic fallback for SBFD symbols or slots through UE group-common DCI or UE-specific DCI. In this case, dynamic fallback for SBFD symbols or slots may be performed according to the above-described legacy symbol or slot configuration. In other words, when the legacy symbol or slot configuration for SBFD symbols or slots indicated for dynamic fallback is a downlink symbol or slot, the corresponding SBFD symbol or slot may fall back to a downlink symbol or slot and be used for operations related to downlink reception of the UE.

On the other hand, when the legacy symbol or slot configuration for SBFD symbols or slots indicated for dynamic fallback is a flexible symbol or slot, it may fall back to a flexible symbol or slot according to the above-described *'tdd-UL-DL-ConfigurationCommon'* and be used for the operations of the base station and UE accordingly. Alternatively, the configuration of UE-specific RRC signaling *'tdd-UL-DL-ConfigurationDedicated'* or slot format indication information through DCI format 2_0 may be further considered. In other words, when dynamic fallback is indicated for the UE, the controller 1310 may ultimately fallback to a downlink symbol/slot or flexible symbol/slot according to the legacy symbol or slot configuration finally set/indicated by the configuration of the separate *'tdd-UL-DL-ConfigurationDedicated'* for the UE or slot format indication information through DCI format 2_0, along with the configuration information according to the *'tdd-UL-DL-ConfigurationCommon'.*

A method of using an uplink subband configured in an SBFD slot or symbol for downlink transmission/reception has been described above. The above-described description may be substantially equally applied to determining whether to support downlink transmission/reception through a guard band configured between the uplink subband and the downlink subband.

According to the embodiments described above, downlink transmission/reception may be performed efficiently in slots or symbols to which full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority under 35 U.S.C. §119(a) to Korean Patent Application No. 10-2023-0003391, filed on January 10, 2023, Korean Patent Application No. 10-2023-0044624, filed on April 5, 2023, and Korean Patent Application No. 10-2024-0002610, filed on January 8, 2024, the entire contents of which are incorporated herein by reference. This application also claims priority to the corresponding applications filed in countries other than the United States for the same reasons, and the entire contents of such applications are incorporated herein by reference.

## Claims

1. A method for performing downlink reception by a user equipment (UE) in full-duplex communication, the method comprising:
receiving configuration information for a downlink slot or a downlink symbol;
receiving downlink resource allocation information that includes information about frequency resources allocated in the downlink slot or the downlink symbol; and
performing downlink reception based on the downlink resource allocation information,
wherein the downlink slot or the downlink symbol includes a subband full duplex (SBFD) symbol where an uplink subband for full-duplex communication is configured, and
wherein the frequency resources include frequency resources configured as the uplink subband.

2. The method of claim 1, wherein the performing downlink reception comprises:
configuring whether to perform the downlink reception using the uplink subband through higher layer signaling.

3. The method of claim 1, wherein the performing downlink reception comprises:
determining whether to perform the downlink reception using the uplink subband based on frequency resource allocation information included in physical layer (L1) control signaling.

4. The method of claim 1, wherein the performing downlink reception comprises:
indicating whether to perform the downlink reception using the uplink subband based on rate matching indication information included in physical layer control signaling.

5. The method of claim 1, wherein the performing downlink reception comprises:
determining whether to perform the downlink reception using the uplink subband based on whether to indicate a fallback to a downlink symbol or a flexible symbol for the SBFD symbol.

6. The method of claim 5, wherein the fallback for the SBFD symbol is indicated through UE-group common physical layer control signaling.

7. A method for performing downlink transmission by a base station in full-duplex communication, the method comprising:
transmitting configuration information for a downlink slot or a downlink symbol;
transmitting downlink resource allocation information that includes information about frequency resources allocated in the downlink slot or the downlink symbol; and
performing downlink transmission based on the downlink resource allocation information,
wherein the downlink slot or the downlink symbol includes a subband full duplex (SBFD) symbol where an uplink subband for full-duplex communication is configured, and
wherein the frequency resources include frequency resources configured as the uplink subband.

8. The method of claim 7, wherein the performing downlink transmission comnprises:
configuring whether to perform the downlink transmission using the uplink subband through higher layer signaling.

9. The method of claim 7, wherein the performing downlink transmission comprises:
determining whether to perform the downlink transmission through the uplink subband based on frequency resource allocation information included in physical layer (L1) control signaling.

10. The method of claim 7, wherein the performing downlink transmission comprises:
indicating whether to perform the downlink transmission using the uplink subband based on rate matching indication information included in physical layer control signaling.

11. The method of claim 7, wherein the performing downlink reception comprises:
determining whether to perform the downlink transmission using the uplink subband based on whether to indicate a fallback to a downlink symbol or a flexible symbol for the SBFD symbol.

12. The method of claim 11, wherein the fallback for the SBFD symbol is indicated through UE-group common physical layer control signaling.

13. A user equipment (UE) performing downlink reception in full-duplex communication, comprising:
a transmitter;
a receiver; and
a controller controlling an operation of the transmitter and the receiver,
wherein the controller receives configuration information for a downlink slot or a downlink symbol, receives downlink resource allocation information including information about frequency resources allocated in the downlink slot or the downlink symbol, and performs downlink reception based on the downlink resource allocation information,
wherein the downlink slot or the downlink symbol includes a subband full duplex (SBFD) symbol where an uplink subband for full-duplex communication is configured, and
wherein the frequency resources include frequency resources configured as the uplink subband.

14. The UE of claim 13, wherein the controller sets whether to perform the downlink reception using the uplink subband through higher layer signaling.

15. The UE of claim 13, wherein the controller determines whether to perform the downlink reception using the uplink subband based on frequency resource allocation information included in physical layer (L1) control signaling.

16. The UE of claim 13, wherein the controller indicates whether to perform the downlink reception using the uplink subband based on rate matching indication information included in physical layer control signaling.

17. The UE of claim 13, wherein the controller determines whether to perform the downlink reception using the uplink subband based on whether to indicate a fallback to a downlink symbol or a flexible symbol for the SBFD symbol.

18. The UE of claim 17, wherein the fallback for the SBFD symbol is indicated through UE-group common physical layer control signaling.
